# EUROPÄISCHE PATENTSCHRIFT

(11) **EP 0 753 532 B1**
(45) Veröffentlichungstag und Bekanntmachung des Hinweises auf die Patenterteilung: **09.05.2001**
(21) Anmeldenummer: 96111284.4
(22) Anmeldetag: 12.07.1996
(51) Int. Cl.: C08G 59/04, C08G 63/91, C09D 163/00, C09D 5/03

(54) **Glycidyletherhaltige amorphe und/oder semikristalline Copolyester**
Glycidyl ether containing amorphous and/or semicrystalline copolyester
Copolyester amorphe et/ou semi-cristallin contenant des éthers glycidyliques

(30) Priorität: 12.07.1995 DE 19525437
(43) Veröffentlichungstag der Anmeldung: 15.01.1997
(73) Patentinhaber: EMS-INVENTA AG, 8002 Zürich (CH)
(72) Erfinder: Kaplan, Andreas, Dr., 7000 Chur (CH); Reich, Albert, 7014 Trin (CH); Gisler, René, 7000 Chur (CH)
(74) Vertreter: Becker Kurig Straus

(56) Entgegenhaltungen:
- EP-A- 0 121 260
- WO-A-94/04589
- WO-A-95/25762
- GB-A- 887 543

## Beschreibung

Die Erfindung betrifft den in den Patentansprüchen angegebenen Gegenstand.

Die Erfindung betrifft insbesondere neue glycidyletherhaltige amorphe und/oder semikristalline Copolyester, die als Komponente in wärmehärtbaren Beschichtungsmassen, auch Pulverlacke genannt, eingesetzt werden können. Diese Pulverlacke enthalten neben diesen epoxidgruppenhaltigen amorphen und/oder semikristallinen Copolyestern geeignete Härtungsmittel und/oder Pigmente und/oder Füllstoffe und/oder Additive. Die epoxidgruppenhaltigen amorphen und/oder semikristallinen Copolyester können durch polymeranaloge Umsetzung hydroxylfunktionellen Copolyestern mit Epihaloalkanen hergestellt werden.

Bei der Umsetzung von ein- oder mehrwertigen monomeren monofunktionellen oder polyfunktionellen aliphatischen oder aromatischen Alkoholen mit Epihaloalkanen erhält man monomere Glycidylether. Diese Verbindungen werden hauptsächlich als Reaktivverdünner in Epoxidbeschichtungssystemen verwendet. Diese Epoxidbeschichtungssysteme enthalten als Bindemittel Glycidylether auf Basis von Bisphenol A. Die Herstellung und Verwendung der monomeren Glycidylether und der Epoxidharze auf Basis von Bisphenol A ist bekannt und z.B. im Handbook of Epoxy Resins von Lee und Neville, Mc Graw Hill Book Company London, 1967 beschrieben.
Eine weitere Stoffgruppe, die hydroxylfunktionelle Gruppen besitzt und die heutzutage weit verbreitet ist, sind hydroxylfunktionelle Copolyester.

Aus WO 94/04589 sind glycidylesterhaltige Polyester bekannt, die neben mehrbasischen aliphatischen Säuren oder carboxylfunktionellen Copolyesterharzen und Füllstoffen und Additiven in wärmehärtbaren pulverförmigen Beschichtungsmassen enthalten sein können.

In der JP-52003700 werden glycidylesterhaltige Copolyester beschrieben, die zur Härtung und Modifikation von Harzen eingesetzt werden sollen.

US-A-3,576,903 beschreibt Addukte (Ester) eines Epoxyharzes mit einem säureterminierten Polymer.

In der nachveröffentlichten WO 95/25762 werden semikristalline Polyglycidylester beschrieben, die in Pulverlacke eingesetzt werden können.

GB-A-887543 beschreibt Bisglycidylether von Carbonsäureestern, die durch Umsetzung eines linearen Polyesters, der an beiden Enden Hydroxylfunktionen aufweist, mit Epichlorhydrin gebildet wurden. Die dort in den Beispielen 1 bis 5 offenbarten Glydidylether weisen Epoxidzahlen von 0,9 bis 2,06 auf.

Es ist daher Aufgabe der Erfindung, neue amorphe und/oder semikristalline Copolyester sowie ein Verfahren zu deren Herstellung bereitzustellen. Diese neuen Copolyester sollen in wärmehärtbaren pulverförmigen Beschichtungsmassen als Komponente eingesetzt werden können.

Weiterhin soll ein neues und einfaches Verfahren zur Herstellung von Pulverlacken angegeben werden.

Diese Aufgabe wurd durch das in Anspruch 1 beschriebene Verfahren zur Herstellung von glycidylesterhaltigen amorphen und/oder semikristallinen Copolyestern mit einem Molekulargewicht (MW) von 100 bis 15000 und einer Epoxidzahl von zwischen 0,03 und 0,75 [Eqi./100g], durch die neuen glycidyletherhaltigen amorphen und/oder semikristallinen Copolyestern gemäß Anspruch 7, durch die wärmehärtbare pulverförmige Beschichtungsmasse gemäß Anspruch 11, durch das Verfahren zur Herstellung von Pulverlacken gemäß Anspruch 15, durch den Pulverlack nach Anspruch 16 sowie durch die Verwendung nach Anspruch 17 gelöst.

In den Unteransprüchen sind vorteilhafte Ausführungsformen der Erfindung enthalten.

Bei der Erfindung wird die überraschende Feststellung zunutzegemacht, daß hydroxylfunktionelle amorphe und/oder semikristalline Copolyester in einer polymeranalogen Reaktion mit Epihaloalkanen umgesetzt und in epoxidgruppen-haltige Copolyester übergeführt und somit erstmals charakterisiert werden können.

Diese neuen speziellen glycidylethergruppenhaltigenamorphen und/odersemikristallinen Copolyester eignen sich insbesondere als Bindemittel für wärmehärtbare pulverförmige Beschichtungssysteme.

Gegenstand der vorliegenden Erfindung sind daher auch wärmehärtbare pulverförmige Beschichtungsmassen enthaltend:
- (A): mindestens einen glycidyletherhaltigen amorphen und/oder semikristallinen Copolyester,
- (B): eine aliphatische und/oder cycloaliphatische mehrbasische Säure und/oder deren Anhydrid und/oder ein polyolmodifiziertes Anhydrid einer mehrbasischen Säure und/oder amorphe oder semikristalline carboxylfunktionelle Copolyesterharze und/oder carboxylfunktionelle Acrylatharze,
- (C): gegebenfalls Füllstoffe und/oder Pigmente und/oder Additive,
wobei der glycidyletherhaltige amorphe und/oder semikristalline Copolyester ein Molekulargewicht (Mn) von 100 bis 15000, insbesondere von 300 bis 10000, besitzt und dadurch erhältlich ist, daß in einem ersten Schritt ein amorpher und/oder semikristalliner Copolyester (D) hergestellt wird, der Hydroxylgruppen enthält, welcher dann anschließend in weiteren Schritten durch die Umsetzung mit Epihaloalkanen in einen epoxidgruppenhaltigen Copolyester (A) übergeführt wird.
Der amorphe und/oder semikristalline Copolyester (D) kann nach den für Polyester bekannten Kondensationsverfahren (Veresterung und/oder Umesterung) nach Stand der Technik hergestellt werden. Auch geeignete Katalysatoren, wie z.B. Dibutylzinnoxid oder Titantetrabutylat können gegebenfalls verwendet werden.

Geeignete amorphe hydroxylfunktionelle Copolyesterharze besitzen eine Hydroxylzahl von 20 - 200 [mg KOH/g] und eine Glasübergangstemperatur von > 40 °C. Amorphe hydroxylfunktionelle Copolyester enthalten als Säurekomponenten hauptsächlich aromatische mehrbasische Carbonsäuren, wie z.B. Terephthalsäure, Isophthalsäure, Phthalsäure, Pyromellithsäure, Trimellithsäure, 3,6-Dichlorphthalsäure, Tetrachlorphthalsäure und soweit verfügbar deren Anhydrid, Chlorid oder Ester. Meistens enthalten sie mindestens 50 Mol-% Terephthalsäure und/oder Isophthalsäure, bevorzugt 80 Mol-%. Der Rest der Säuren (Differenz zu 100 Mol-%) besteht aus aliphatischen und/oder cycloaliphatischen mehrbasischen Säuren, wie z.B. 1,4-Cyclohexandicarbonsäure,Tetrahydrophthalsäure, Hexahydroendomethylenterephthalsäure,Hexachlorophthalsäure,Azelainsäure, Sebazinsäure, Decandicarbonsäure, Adipinsäure, Dodecandicarbonsäure, Bernsteinsäure, Maleinsäure oder dimere Fettsäuren. Hydroxycarbonsäuren und/oder Lactone, wie z.B. 1 2-Hydroxystearinsäure, ∈-Caprolacton oder Hydroxypivalinsäureester des Neopentylglykols, können ebenfalls verwendet werden. In geringen Mengen kommen auch Monocarbonsäuren, wie z.B. Benzoesäure, Tertiärbutylbenzoesäure, Hexahydrobenzoesäure und gesättigte aliphatische Monocarbonsäuren, zum Einsatz.

Als geeignete Alkoholkomponenten seien aliphatische Diole genannt, wie z.B. Ethylenglykol, 1,3-Propandiol, 1,2-Propandiol, 1,2-Butandiol, 1,3-Butandiol, 1,4-Butandiol, 2,2-Dimethylpropandiol-1,3 (Neopentylglykol), 2,5-Hexandiol, 1,6-Hexandiol, 2,2-[Bis-(4-hydroxycyclohexyl )]propan, 1,4-Dimethylolcyclohexan, Diethylenglykol, Dipropylenglykolund 2,2-Bis-[4-(2-hydroxy)]phenylpropan. In geringeren Mengen kommen auch Polyole zum Einsatz, wie z.B. Glycerol, Hexantriol, Pentaeryltritol, Sorbitol, Trimethylolethan, Trimethylolpropan und Tris(2-hydroxy)isocyanurat. Auch Epoxyverbindungen können anstelle von Diolen oder Polyolen verwendet werden. Bevorzugt beträgt der Anteil an Neopentylglykol und/oder Propylenglykol in der Alkoholkomponente mindestens 50 Mol-%. bezogen auf Gesamtsäuren.
Geeignete semikristalline Polyester besitzen eine Hydroxylzahl von 20 - 400 [mg KOH/g] und einen genau definierten DSC-Schmelzpunkt. Es handelt sich bei den semikristallinen Polyestern um Kondensationsprodukte aus aliphatischen Polyolen, bevorzugt aliphatischen Diolen, und aliphatischen und/oder cycloaliphatischen und/oderaromatischen mehrbasischen Carbonsäuren, bevorzugt zweibasische Säuren. Beispielhaft seien als aliphatische Polyole genannt: Ethylenglykol (1,2-Ethandiol), Propylenglykol (1,3-Propandiol), Butylenglykol (1,4-Butandiol), 1,6-Hexandiol, Neopentylglykol, Cyclohexandimethanol, Trimethylolpropan usw. Bevorzugt sind aliphatische Diole, wie z.B. Ethylenglykol, Butylenglykol oder 1,6-Hexandiol.
Geeignete mehrbasische Carbonsäuren sind aliphatische Dicarbonsäuren, bevorzugt C₄-C₂₀-Dicarbonsäuren, wie z.B. Adipinsäure, Azelainsäure, Sebazinsäure, Dodecandicarbonsäure, Bernsteinsäure, Undecandicarbonsäure, und aromatische Dicarbonsäuren, wie z.B. Terephthalsäure, Isophthalsäure, Phthalsäure und deren Hydrierungsprodukte, wie z.B. 1,4-Cyclohexandicarbonsäure. Bevorzugt sind aliphatische Dicarbonsäuren mit 6 bis 12 Kohlenstoffatomen. Natürlich können auch Mischungen verschiedener Polyole und mehrbasischen Carbonsäuren verwendet werden.

Die Umsetzung der hydroxylfunktionellen amorphen und/oder semikristallinen Copolyester (D) mit Epihaloalkanen zu dem erfindungsgemäßen epoxidgruppenhaltigen Copolyester (A) erfolgt in der für die Herstellung von Glycidylethern üblichen Art.
Die Glycidylether von hydroxylfunktionellen Copolyestern erhält man, indem man den hydroxylfunktionellen amorphen und/oder semikristallinen Copolyester mit Epihaloalkanen umsetzt. In der Regel erfolgt diese Umsetzung in einem 2-Stufen -Verfahren. In der ersten Stufe wird Epihaloalkan an die Hydroxylgruppe des Polyesters addiert, wobei sich ein Polyhalohydrinether bildet. Diese Reaktion wird durch Lewissäuren, wie z.B. Bortrifluorid, Zinntetrachlorid usw. katalysiert. Als Lösungsmittel sind inerte Lösemittel, wie z.B. Benzol, Toluol, Chloroform usw. geeignet oder es wird in einem Überschuß von Epihaloalkan, welches gleichzeitig als Lösemittel dient, gearbeitet.
In der nachfolgenden zweiten Stufe bildet sich durch eine Dehydrohalogenierungsreaktion in einem inerten Lösemittel, beispielhaft sei Toluol genannt, unter Verwendung einer wäßrigen Laugenlösung, beispielhaft sei eine Natriumhydroxidlösung genannt, der glycidetherhaltige amorphe und/oder semikristalline Copolyester.
Die bei dieser Reaktion anfallende Salzlösung und Wasser bilden zusammen mit dem Wasser der Laugenlösung eine spezifisch schwerere wäßrige Ablauge, die nach der Umsetzung in einfacher Weise von der organischen Schicht abgetrennt werden kann.
Die Reaktionstemperatur in der ersten Stufe beträgt ca 80 °C , bei einer Reaktionszeit von ca. 30 min. Die Reaktionstemperatur in der zweiten Stufe beträgt 50 °C , bei einer Reaktionszeit von ca. 60 min.
Die Umsetzung der hydroxylfunktionellen amorphen und/oder semikristallinen Copolyester kann aber auch in einer 1 Stufen-Reaktion erfolgen. Es handelt sich dabei um eine phasentransferkatalysierte Zweiphasenreaktion zwischen dem hydroxylfunktionellen amorphen und / oder semikristallinen Copolyester, Epihaloalkan und einer wäßrigen Laugenlösung, bevorzugt Natriumhydroxidlösung. Als Phasentransferkatalysatoren werden dabei quartanäre Ammonium- und/oder Phosphoniumverbindungen eingesetzt, wie z.B. Benzyltrimethylammoniumbromid, Tetramethylammoniumbromid, Benzyltrimethyl-ammoniumchlorid, Ethyltriphenylphosphoniumbromid und Butyltriphenylphosphonium-chlorid, bevorzugt wird Benzyltrimethylammoniumbromid.
Die Reaktionstemperatur Stufe beträgt 60 °C, bei einer Reaktionszeit von ca. 60 min.
Eine Variation des Phasentransferverfahrens ist das sogenannte Azeotropverfahren, bei dem während der Zweiphasenreaktion das vorhandene und entstehende Wasser mit dem Epihaloalkan azeotrop unterVakuum abdestilliert wird.

Beispielhaft seien als geeignete Epihaloalkane 1-Chloro-2,3-epoxypropan (Epichlorhydrin),1-Chloro-2-methyl-2,3-epoxypropan,1-Chloro-2,3-epoxybutanund Epibromhydrin genannt. Bevorzugt wird 1-Chloro-2,3-epoxypropan. Natürlich können auch noch weitere Epihaloalkane erfolgreich eingesetzt werden, wie z.B. Epibromhydrin.

Die Molekulargewichte (Mw) der epoxidhaltigen amorphen und/oder semikristallinen Copolyester betragen 100 bis 15000, insbesondere 300 bis 10000. Die Glasumwandlungstemperatur liegt zwischen 30 und 70 °C bei den amorphen glycidyletherhaltigen Copolyestern. Die Epoxidzahl der erfindungsgemäßen epoxidgruppenhaltigen Copolyester liegt im Bereich von 0,03 bis 0,75 [Equiv./100g], bevorzugt zwischen 0,03 und 0,42 [Equiv./100g].

Als Härtungsmittel -Komponente (B)- können aliphatische mehrbasische Säuren, bevorzugt zweibasische Säuren, wie z.B. Adipinsäure, Pimelinsäure, Suberinsäure, Azelainsäure, Sebacinsäure, Malonsäure, Bernsteinsäure, Glutarsäure, 1,12-Dodecandisäure, usw. verwendet werden. Die Anhydride dieser Säuren können ebenfalls verwendet werden z.B. Glutarsäureanhydrid, Bernsteinsäure-anhydrid, sowie die Polyanhydride dieser Dicarbonsäuren. Diese Polyanhydride werden durch intermolekulare Kondensation der genannten aliphatischen zweibasischen Dicarbonsäuren erhalten.
Beispiele sind Adipinsäure(poly)anhydrid, Azelainsäure-(poly)anhydrid, Sebacinsäure(poly)anhydrid, Dodecandisäure(poly)anhydrid usw. Die Polyanhydride haben ein Molekulargewicht (Gewichtsmittel bezogen auf Polystyrolstandard) von 1000 - 5000. Die Polyanhydride können auch mit Polyol modifiziert werden. Die Polyanhydride können auch im Gemisch mit den aliphatischen zweibasischen Dicarbon-säuren als Härtungsmittel eingesetzt werden oder im Gemisch mit Hydroxycarbonsäuren, die Schmelzpunkte zwischen 40 und 150 °C besitzen, z.B. 12-Hydroxy-Stearinsäure, 2- bzw. 3- bzw. 10-Hydroxyoctadecansäure, 2-Hydroxymyristinsäure.
Auch cycloaliphatische Dicarbonsäuren, wie z.B. 1,4-Cyclohexandicarbonsäure oder deren Polyanhydride können als Härtungsmittel verwendet werden.
Geeignete Härtungsmittel sind auch amorphe und semikristalline Copolyester. Sowohl die amorphen, als auch die semikristallinen Copolyester können nach den für Polyestern bekannten Kondensationsverfahren (Veresterung und/oder Umesterung) nach Stand der Technik hergestellt werden. Auch geeignete Katalysatoren, wie z.B. Dibutylzinnoxid oder Titantetrabutylat können gegebenfalls verwendet werden.

Geeignete amorphe carboxylfunktionelle Copolyesterharze besitzen eine Säurezahl von 20 - 100 [mg KOH/g] und eine Glasübergangstemperatur von > 40 °C. Amorphe carboxylfunktionelle Copolyester enthalten als Säurekomponenten hauptsächlich aromatische mehrbasische Carbonsäuren, wie z.B. Terephthalsäure, Isophthalsäure, Phthalsäure, Pyromellithsäure, Trimellithsäure, 3,6-Dichlorphthalsäure, Tetrachlorphthalsäure und soweit verfügbar deren Anhydrid, Chlorid oder Ester. Meistens enthalten sie mindestens 50 Mol-% Terephthalsäure und/oder Isophthalsäure, bevorzugt 80 Mol-%. Der Rest der Säuren (Differenz zu 100 Mol-%) besteht aus aliphatischen und/oder cycloaliphatischen mehrbasischen Säuren, wie z.B. 1,4-Cyclohexandicarbonsäure, Tetrahydrophthalsäure, Hexahydroendomethylenterephthalsäure, Hexachlorophthalsäure, Azelainsäure, Sebazinsäure, Decandicarbonsäure, Adipinsäure, Dodecandicarbonsäure, Bernsteinsäure, Maleinsäure oder dimere Fettsäuren. Hydroxycarbonsäuren und/oder Lactone, wie z.B. 12-Hydroxystearinsäure, ∈-Caprolacton oder Hydroxypivalinsäureester des Neopentylglykols, können ebenfalls verwendet werden. In geringen Mengen kommen auch Monocarbonsäuren, wie z.B. Benzoesäure, Tertiärbutylbenzoesäure, Hexahydrobenzoesäure und gesättigte aliphatische Monocarbonsäuren, zum Einsatz.

Als geeignete Alkoholkomponenten seien aliphatische Diole genannt, wie z.B. Ethylenglykol, 1,3-Propandiol, 1,2-Propandiol, 1,2-Butandiol, 1,3-Butandiol, 1,4-Butandiol, 2,2-Dimethylpropandiol-1,3 (Neopentylglykol), 2,5-Hexandiol, 1,6-Hexandiol, 2,2-[Bis-(4-hydroxycyclohexyl )]propan, 1,4-Dimethylolcyclohexan, Diethylenglykol, Dipropylenglykolund 2,2-Bis-[4-(2-hydroxy)]phenylpropan. In geringeren Mengen kommen auch Polyole zum Einsatz, wie z.B. Glycerol, Hexantriol, Pentaeryltritol, Sorbitol, Trimethylolethan, Trimethylolpropan und Tris(2-hydroxy)isocyanurat. Auch Epoxyverbindungen können anstelle von Diolen oder Polyolen verwendet werden. Bevorzugt beträgt der Anteil an Neopentylglykol und/oder Propylenglykol in der Alkoholkomponente mindestens 50 Mol-%. bezogen auf Gesamtsäuren.
Geeignete semikristalline Polyester besitzen eine Säurezahl von 20 - 750 [mg KOH/g] und einen genau definierten DSC-Schmelzpunkt. Es handelt sich bei den semikristallinen Polyestern um Kondensationsprodukte aus aliphatischen Polyolen, bevorzugt aliphatischen Diolen, und aliphatischen und/oder cycloaliphatischen und/oderaromatischen mehrbasischen Carbonsäuren, bevorzugtzweibasische Säuren. Beispielhaft seien als aliphatische Polyole genannt: Ethylenglykol (1,2-Ethandiol), Propylenglykol (1,3-Propandiol), Butylenglykol (1,4-Butandiol), 1,6-Hexandiol, Neopentylglykol, Cyclohexandimethanol, Trimethylolpropan usw. Bevorzugt sind aliphatische Diole, wie z.B. Ethylenglykol, Butylenglykol oder 1,6-Hexandiol.
Geeignete mehrbasische Carbonsäuren sind aliphatische Dicarbonsäuren, bevorzugt C₄-C₂₀-Dicarbonsäuren, wie z.B. Adipinsäure, Azelainsäure, Sebazinsäure, Dodecandicarbonsäure, Bernsteinsäure, Undecandicarbonsäure, und aromatische Dicarbonsäuren, wie z.B. Terephthalsäure, Isophthalsäure, Phthalsäure und deren Hydrierungsprodukte, wie z.B. 1,4-Cyclohexandicarbonsäure. Bevorzugt sind aliphatische Dicarbonsäuren mit 6 bis 12 Kohlenstoffatomen. Natürlich können auch Mischungen verschiedener Polyole und mehrbasischer Carbonsäuren verwendet werden.

Geeignete carboxylfunktionelle Acrylatpolymere besitzen eine Säurezahl von 20 - 100 [mg KOH/g], hergestellt durch Copolymerisation eines Monomerengemisches, bestehend aus,
a) 0 bis 70 Gew. Teilen Methyl(meth)acrylat,
b) 0 bis 60 Gew. Teilen (Cyclo)Alkylestern der Acryl- und/oder Methacrylsäure mit 2 bis 18 Kohlenstoffresten im Alkyl- bzw. im Cycloalkylrest,
c) 0 bis 90 Gew. Teilen Vinylaromaten,
d) 0 bis 60 Gew. Teilen olefinisch ungesättigten Carbonsäuren,
wobei die Summe der Gewichtsteile der Komponenten a) bis d) 100 ergibt.

Bei den Monomeren b) handelt es sich vorzugsweise um (Cyclo)Alkylester der Acryl- oder Methacrylsäure mit 2 bis 18 Kohlenstoffatomen im (Cyclo)Alkylrest. Beispiele geeigneter bzw. bevorzugt geeigneter Monomerer b) sind Ethyl(methyl)acrylat, n-Propyl(meth)acrylat, Isopropyl(meth)acrylat, n-Butyl(meth)acrylat, Isobutyl(meth)acrylat, tert.-Butyl(meth)acrylat, 2-Ethylhexyl(meth)acrylat, Cyclohexylmethacrylat, Neopentylmethacrylat, Isobornyl-methacrylat, 3,3,5-Trimethylcyclohexylmethacrylat und Stearylmethacrylat.
Als Monomere c) kommen z.B. Styrol, Vinyltoluol und α-Ethylstyrol in Betracht. Beispiele für d) sind Acryl- und Methacrylsäure, die auch bevorzugt eingesetzt werden, wie auch Crotonsäure, Itaconsäure Fumarsäure, Maleinsäure und Citraconsäure.

Die Herstellung der Copolymerisate kann durch Copolymerisation der beispielhaft genannten Monomere a) bis d) nach üblichen radikalischen Polymerisationsverfahren erfolgen, wie beispielsweise Lösungs-, Emulsions-, Perl- oder Substanzpolymerisation.
Dabei werden die Monomeren bei Temperaturen von 60 bis 160 °C, vorzugsweise 80 bis 150 °C, in Gegenwart von Radikalbildnern und gegebenfalls Molekulargewichtsreglern copolymerisiert.
Die Herstellung der carboxylfunktionellen Acrylat-Copolymerisate erfolgt in inerten Lösungsmitteln. Geeignete Lösungsmittel sind beispielsweise Aromaten, wie Benzol, Toluol, Xylol; Ester, wie Ethylacetat, Butylacetat, Hexylacetat, Heptylacetat, Methylglykolacetat, Ethylglykolacetat, Methoxypropylacetat; Ether, wie Tetrahydrofuran, Dioxan, Diethylenglykoldimethylether; Ketone, wie Aceton, Methylethylketon, Methylisobutylketon, Methyl-n-amylketon, Methylisoamylketon oder beliebige Gemische derartiger Lösungsmittel.
Die Herstellung der Coploymerisate kann kontinuierlich oder diskontinuierlich erfolgen. Üblicherweise wird in einen Polymerisationsreaktor gleichmäßig und kontinuierlich die Monomermischung und der Initiator eindosiert und gleichzeitig die entsprechende Menge Polymerisat kontinuierlich abgeführt. Vorzugsweise können so chemisch nahezu einheitliche Copolymere hergestellt werden. Chemisch nahezu einheitliche Copolymere können auch hergestellt werden, indem man die Reaktionsmischung mit konstanter Geschwindigkeit in einen Rührkessel einlaufen läßt, ohne das Polymerisat abzuführen.

Man kann auch einen Teil der Monomeren beispielsweise in Lösungsmitteln der genannten Art vorlegen und die restlichen Monomeren und Hilfsmittel getrennt oder gemeinsam in diese Vorlage bei der Reaktionstemperatur eintragen.
Im allgemeinen erfolgt die Polymerisation unter Atmosphärendruck, kann jedoch auch bei Drucken bis zu 2,5 x 10⁶ Pa (25 bar) durchgeführt werden. Die Initiatoren werden in Mengen von 0.05 bis 15 Gew.-%, bezogen auf die Gesamtmenge der Monomeren, eingesetzt.
Geeignete Initiatoren sind übliche Radikalstarter, wie z.B. aliphatische Azoverbindungen, wie Azodiisobuttersäurenitril, Azo-bis-2-methylvaleronitril, 1,1'-Azobis-1-cyclohexannitril und 2,2'-Azo-bis-isobuttersäurealkylester; symmetrische Diacylperoxide, wie z.B. Acetyl-, Propionyl- oder Butyrylperoxid, mit Brom-, Nitro-, Methyl- oder Methoxygruppen substituierte Benzoylperoxide, Laurylperoxide; symmetrische Peroxydicarbonate, z.B. tert.- Butylperbenzoat; Hydroperoxide, wie beispielsweise tert.- Butylhydroperoxid, Cumolhydroperoxid; Dialkylperoxide, wie Dicumylperoxid, tert.-Butylcumylperoxid oder Di-tert.-butylperoxid. Zur Regelung des Molekulargewichtes der Copolymerisate können übliche Regler bei der Herstellung eingesetzt werden. Beispielhaft genannt seien Mercaptopropionsäure, tert.-Dodecylmercaptan, n-Dodecylmercaptan oder Diisopropylxanthogendisulfid. Die Regler können in Mengen von 0,1 bis 10 Gew.-% bezogen auf die Gesamtmenge der Monomeren, zugegeben werden.
Die bei der Copolymerisation anfallenden Lösungen der Copolymerisate können dann ohne weitere Aufarbeitung dem Ausdampfungs- bzw. Entgasungsprozeß zugeführt werden, bei dem das Lösungsmittel beispielsweise in einem Ausdampfextruder oder Sprühtrockner bei ca. 120 bis 160 °C und einem Vakuum von 1 x 10⁷ bis 3 x 10⁷ Pa (100 bis 300 mbar) entfernt und die erfindungsgemäß zu verwendenden Copolymerisate gewonnen werden.

Auch Gemische verschiedener geeigneter Härter können in den wärmehärtbaren pulverförmigen Beschichtungsmassen verwendet werden.
Die Menge der als Härtungsmittel -Komponente (B)- eingesetzten Anhydride und Säuren, bezogen auf das Acrylharz, kann über einen weiten Bereich variieren und richtet sich nach der Anzahl der Epoxidgruppen im Acrylatharz. Im allgemeinen wird ein Molverhältnis von Carboxylgruppen bzw. Anhydridgruppen zu Epoxidgruppen von 0.4 - 1.4:1 bevorzugt von 0.8 - 1.2:1 gewählt.

Im erfindungsgemäßen Beschichtungssystem können die für die Herstellung und die Verwendung von Pulverlacken üblichen Pigmente und/oder Füllstoffe und/oder Additive vorhanden sein.
Dabei handelt es sich um Additive aus der Gruppe Beschleuniger, Verlauf- und Entgasungsmittel, Hitze-, UV- und/oder HALS-Stabilisatoren und/oder Triboadditive sowie erforderlicherweise um Mattierungsmittel, wie z.B. Wachse.

Die Herstellung der erfindungsgemäßen Pulverlacke erfolgt vorzugsweise in der Schmelze durch gemeinsame Extrusion sämtlicher Formulierungsbestandteile bei Temperaturen zwischen 60 bis 140 °C. Das Extrudat wird anschließend abgekühlt, gemahlen und auf eine Korngröße kleiner als 90 *µ*m abgesiebt. Grundsätzlich sind auch andere Verfahren zur Herstellung der Pulverlacke geeignet, wie z.B. Vermischen der Formulierungsbestandteile in Lösung und anschließende Ausfällung oder destillative Entfernung der Lösemittel.
Die Applikation der erfindungsgemäßen Pulverlacke erfolgt nach den für Pulverlacke üblichen Verfahren, z.B. mittels elektrostatischer Sprühvorrichtungen (Corona oder Tribo) oder nach dem Wirbelbett-Verfahren.

Die Herstellung und die Eigenschaften der erfindungsgemäßen wärmehärtbaren pulverförmigen Beschichtungsmassen werden nachfolgend beispielhaft dargestellt.

### Herstellung der hydroxylfunktionellen Copolyester

### Beipiele 1 bis 4

### Beispiel 1

In einem 2 - Veresterungsreaktor, versehen mit Temperaturfühler, Rührer, Rückflußkolonne und Destillationsbrücke werden 501,8 g (4,82 Mol) Neopentylglykol vorgelegt und bei 140°C unter einer während der ganzen Reaktion aufrechtgehaltenen Stickstoffatmosphäre aufgeschmolzen.Unter Rühren werden dann 533,3 g (3,21 Mol) Isophthalsäure, 138,2 g (0,80 Mol) Cyclohexandicarbonsäure und 0,6 g Veresterungskatalysator zugegeben. Nach schrittweiser Erhöhung der Innentemperatur wird die Reaktion solange fortgesetzt, bis kein Destillat mehr entsteht. Unter Vakuum von 2 x 10³ Pa (20 mbar) wird bis zum Erreichen einer Schmelzviskosität von ca. 50 Pa · s bei 160°C kondensiert.
Der erhaltene Polyester hat eine Säurezahl von < 2 mg KOH/g, eine Hydroxylzahl von 35 mg KOH/g und eine ICI-Schmelzviskosität bei 160°C von 45 Pa · s.
Das Molekulargewicht, berechnet als Zahlenmittel aus der Endgruppenkonzentration, beläuft sich auf ca. 2800.

### Beispiel 2

In einer zu Beispiel 1 analogen Versuchsapparatur werden 501,8 g (4,82 Mol) Neopentylglykol vorgelegt und bei 140°C unter einer während der ganzen Reaktion aufrechtgehaltenen Stickstoffatmosphäre aufgeschmolzen.Unter Rühren werden dann 533,3 g (3,21 Mol) Isophthalsäure, 138,2 g (0,80 Mol) Cyclohexandicarbonsäure und 0,6 g Veresterungskatalysator zugegeben. Nach schrittweiser Erhöhung der Innentemperatur wird die Reaktion solange fortgesetzt, bis kein Destillat mehr entsteht. Unter Vakuum von 20 mbar wird bis zum Erreichen einer Schmelzviskosität von ca. 15 Pa · s bei 160°C kondensiert. Der erhaltene Polyester hat eine Säurezahl von < 2 mg KOH/g, eine Hydroxylzahl von 60 mg KOH/g und eine ICI-Schmelzviskosität bei 160°C von 14 Pa · s.
Das Molekulargewicht, berechnet als Zahlenmittel aus der Endgruppenkonzentration, beläuft sich auf ca. 1700.

### Beispiel 3

In einer zu Beispiel 1 analogen Versuchsapparatur werden 492,0 g (4,72 Mol) Neopentylglykol, 17,5 g (0,28 Mol) Ethylenglykol und 5,4 g (0,04Mol) Trimethylolpropan vorgelegt und bei 140°C unter einer während der ganzen Reaktion aufrechtgehaltenen Stickstoffatmosphäre aufgeschmolzen.Unter Rühren werden dann 496,1 g (2,99 Mol) Terephthalsäure, 134,1 g (0,81 Mol) Isophthalsäure, 29,5 g (0,20 Mol) Adipinsäure, 7,7 g (0,04 Mol) Trimellitsäureanhydrid und 0,6 g Veresterungskatalysator zugegeben. Nach schrittweiser Erhöhung der Innentemperatur wird die Reaktion solange fortgesetzt, bis kein Destillat mehr entsteht. Unter Vakuum von 2 x 10³ Pa (20 mbar) wird bis zum Erreichen einer Schmelzviskosität von max. 10 Pa · s bei 160°C kondensiert.
Der erhaltene Polyester hat eine Säurezahl von < 2 mg KOH/g, eine Hydroxylzahl von 100 mg KOH/g und eine ICI-Schmelzviskosität bei 160°C von 8 Pa · s.
Das Molekulargewicht, berechnet als Zahlenmittel aus der Endgruppenkonzentration, beläuft sich auf ca. 1100.

### Beispiel 4

In einer zu Beispiel 1 analogen Versuchsapparatur werden 533,1 g (4,51 Mol) Hexandiol vorgelegt und bei 140°C unter einer während der ganzen Reaktion aufrechtgehaltenen Stickstoffatmosphäre aufgeschmolzen.Unter Rühren werden dann 629,3 g (2,73 Mol) Dodecandisäure und 0,6 g Veresterungskatalysator zugegeben. Nach schrittweiser Erhöhung der Innentemperatur wird die Reaktion solange fortgesetzt, bis kein Destillat mehr entsteht.
Der erhaltene Polyester hat eine Säurezahl von < 2 mg KOH/g, eine Hydroxylzahl von 199 mg KOH/g und eine ICI-Schmelzviskosität bei 160°C von 2 Pa · s.
Das Molekulargewicht, berechnet als Zahlenmittel aus der Endgruppenkonzentration, beläuft sich auf ca. 550.

**Tabelle 1**

| Eigenschaften; Beispiele 1-4 | | | | |
|---|---|---|---|---|
| | Beispiel 1 | Beispiel 2 | Beispiel 3 | Beispiel 4 |
| Harz-Nr. | I | II | III | IV |
| OH-Zahl [mg KOH/g] | 33 | 60 | 100 | 200 |
| Molekulargewicht (Mn) | 2800 | 1700 | 1100 | 550 |

### Herstellung der erfindungsgemäßen epoxidgruppenhaltigen Copolyester Beispiele 5 bis 12

### Beispiel 5

In einen beheizbaren 20 Liter Reaktor, versehen mit Thermometer, Rührer und Rückflußkolonne werden 1697 g Harz-Nr. I in 6500 g Toluol gelöst. Nach der Zugabe von 18 ml Bortrifluorid-ethyletherat wird die Temperatur auf 80 °C erhöht und innerhalb von 1 Stunde 100 g Epichlorhydrin zugetropft. Danach wird während 30 Minuten bei 80 °C nachgerührt und dann auf 50 °C abgekühlt. Nach der Zugabe von 200 g wäßriger Natronlauge (22%-ig) rührt man bei 50 °C für eine weitere Stunde. Danach wird die wäßrige Phase abgetrennt. Nach der Vakuumdestillation der organischen Phase bei einer Temperatur von 130 °C unter vermindertem Druck 133 Pa (1mm Hg) erhält man Harz-Nr. V (Eigenschaften siehe Tabelle 2).

### Beispiel 6

In einen beheizbaren 20 Liter Reaktor, versehen mit Thermometer, Rührer und Rückflußkolonne werden 934 g Harz-Nr.ll in 3000 g Toluol gelöst. Nach der Zugabe von 10 ml Bortrifluorid-ethyletherat wird die Temperatur auf 80 °C erhöht und innerhalb von 1 Stunde 100 g Epichlorhydrin zugetropft. Danach wird während 30 Minuten bei 80 °C nachgerührt und dann auf 50 °C abgekühlt. Nach der Zugabe von 200 g wäßriger Natronlauge (22%-ig) rührt man bei 50 °C für eine weitere Stunde. Danach wird die wäßrige Phase abgetrennt. Nach der Vakuumdestillation der organischen Phase bei einer Temperatur von 130 °C unter vermindertem Druck 133 Pa (1mm Hg) erhält man Harz-Nr. VI (Eigenschaften siehe Tabelle 2).

### Beispiel 7

In einen beheizbaren 20 Liter Reaktor, versehen mit Thermometer, Rührer und Rückflußkolonne werden 560 g Harz-Nr.III in 2000 g Toluol gelöst. Nach der Zugabe von 6 ml Bortrifluorid-ethyletherat wird die Temperatur auf 80 ° C erhöht und innerhalb von 1 Stunde 100 g Epichlorhydrin zugetropft. Danach wird während 30 Minuten bei 80 °C nachgerührt und dann auf 50 °C abgekühlt. Nach der Zugabe von 200 g wäßriger Natronlauge (22%-ig) rührt man bei 50 °C für eine weitere Stunde. Danach wird die wäßrige Phase abgetrennt. Nach der Vakuumdestillation der organischen Phase bei einer Temperatur von 130 °C unter vermindertem Druck 133 Pa (1mm Hg) erhält man Harz-Nr. VII (Eigenschaften siehe Tabelle 2).

### Beispiel 8

In einen beheizbaren 20 Liter Reaktor, versehen mit Thermometer, Rührer und Rückflußkolonne werden 280 g Harz-Nr. IV in 1000 g Toluol gelöst. Nach der Zugabe von 3 ml Bortrifluorid-ethyletherat wird die Temperatur auf 80 °C erhöht und innerhalb von 1 Stunde 100 g Epichlorhydrin zugetropft. Danach wird während 30 Minuten bei 80 °C nachgerührt und dann auf 50 °C abgekühlt. Nach der Zugabe von 200 g wäßriger Natronlauge (22%-ig) rührt man bei 50 °C für eine weitere Stunde. Danach wird die wäßrige Phase abgetrennt. Nach der Vakuumdestillation der organischen Phase bei einer Temperatur von 130 °C unter vermindertem Druck 133 Pa (1mm Hg) erhält man Harz-Nr. VIII (Eigenschaften siehe Tabelle 2).

### Beispiel 9

In einen beheizbaren 20 Liter Reaktor, versehen mit Thermometer, Rührer und Rückflußkolonne werden 1697 g Harz-Nr. I in 6500 g Toluol und 1000 g Epichlorhydrin bei 60 °C gelöst. Nach der Zugabe von 18,6 g Benzyltrimethylammoniumchlorid gibt man 200 g wäßrige Natronlauge (22%-ig) zu und rührt während 1 Stunde bei 60 °C. Danach wird die wäßrige Phase abgetrennt. Nach der Vakuumdestillation der organischen Phase bei einer Temperatur von 130 °C unter vermindertem Druck 133 Pa (1mm Hg) erhält man Harz-Nr. IX (Eigenschaften siehe Tabelle 2).

### Beispiel 10

In einen beheizbaren 20 Liter Reaktor, versehen mit Thermometer, Rührer und Rückflußkolonne werden 934 g Harz-Nr.II in 3000 g Toluol und 1000 g Epichlorhydrin bei 60 °C gelöst. Nach der Zugabe von 18,6 g Benzyltrimethylammoniumchlorid gibt man 200 g wäßrige Natronlauge (22%-ig) zu und rührt während 1 Stunde bei 60 °C. Danach wird die wäßrige Phase abgetrennt. Nach der Vakuumdestillation der organischen Phase bei einer Temperatur von 130 °C unter vermindertem Druck 133 Pa (1mm Hg) erhält man Harz-Nr. X (Eigenschaften siehe Tabelle 2).

### Beispiel 11

In einen beheizbaren 20 Liter Reaktor, versehen mit Thermometer, Rührer und Rückflußkolonne werden 560 g Harz-Nr. III in 2000 g Toluol und 1000 g Epichlorhydrin bei 60 °C gelöst. Nach der Zugabe von 18,6 g Benzyltrimethylammoniumchlorid gibt man 200 g wäßrige Natronlauge (22%-ig) zu und rührt während 1 Stunde bei 60 ° C. Danach wird die wäßrige Phase abgetrennt. Nach der Vakuumdestillation der organischen Phase bei einer Temperatur von 130 °C unter vermindertem Druck 133 Pa (1mm Hg) erhält man Harz-Nr. XI (Eigenschaften siehe Tabelle 2).

### Beispiel 12

In einen beheizbaren 20 Liter Reaktor, versehen mit Thermometer, Rührer und Rückflußkolonne werden 280 g Harz-Nr. IV in 1000 g Toluol und 1000 g Epichlorhydrin bei 60 °C gelöst. Nach der Zugabe von 18,6 g Benzyltrimethylammoniumchlorid gibt man 200 g wäßrige Natronlauge (22%-ig) zu und rührt während 1 Stunde bei 60 °C. Danach wird die wäßrige Phase abgetrennt. Nach der Vakuumdestillation der organischen Phase bei einer Temperatur von 130 °C unter vermindertem Druck 133 Pa (1mm Hg) erhält man Harz-Nr. XII (Eigenschaften siehe Tabelle 2).

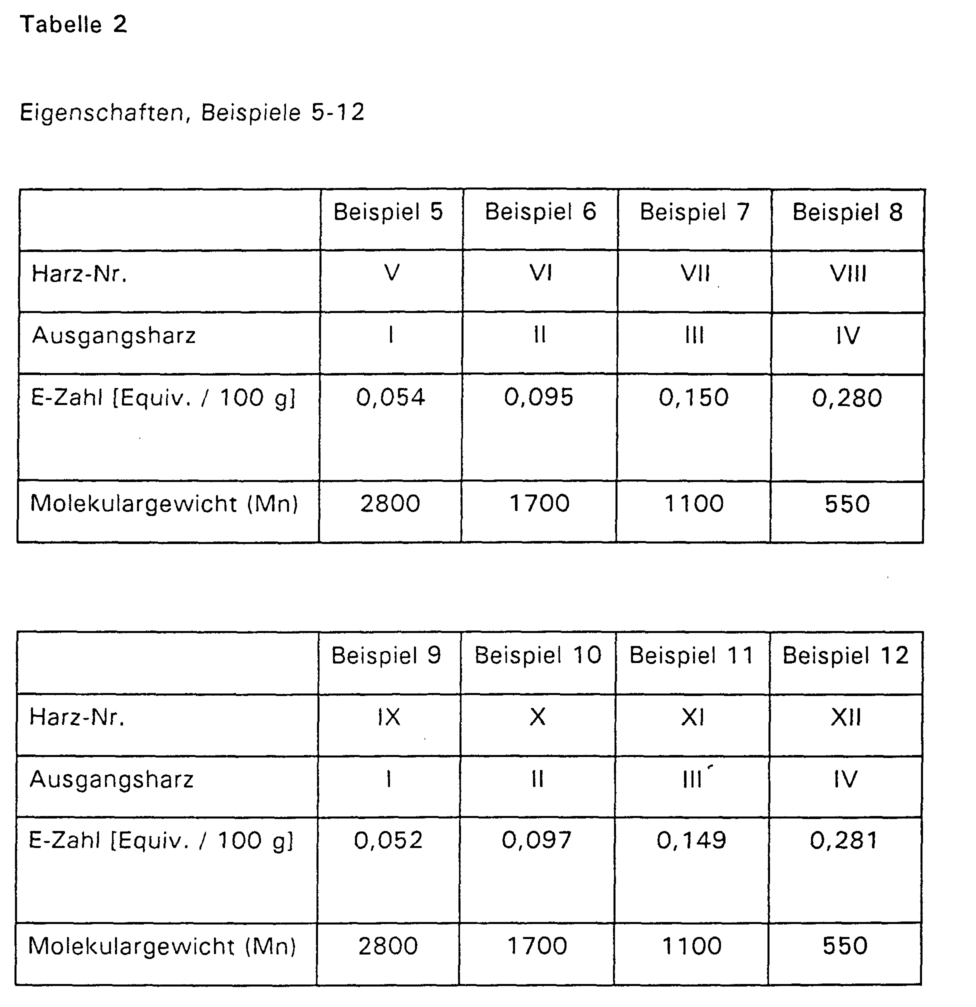

### Herstellung der Pulverlacke

### Beispiele 13 - 22

### Allgemeine Arbeitsvorschrift

Die Komponenten (siehe Tabelle 3) werden in einem Henschelmischer bei 700 Upm während 30 sek trocken gemischt und anschließend auf einem Buss-Co-Kneter (PLK 46) bei einer Manteltemperatur von 100 ° C, gekühlter Schnecke und einer Schneckenumdrehung von 150 Upm extrudiert. Das Extrudat wird gekühlt, gemahlen und auf kleiner als 90*µ*m abgesiebt.
Die Pulverlacke werden elektrostatisch (Corona-oder Tribo) auf Aluminiumbleche (Q-panel AL-36 5005 H 14/08 (0,8mm)) appliziert und bei einer Einbrenntemperatur von 200 ° C und einer Einbrennzeit von 15 min. ausgehärtet. Die Schichtdicke beträgt 60 *µ*m.
Tabelle 4 zeigt die lacktechnischen Eigenschaften der Beispiele 13-22.

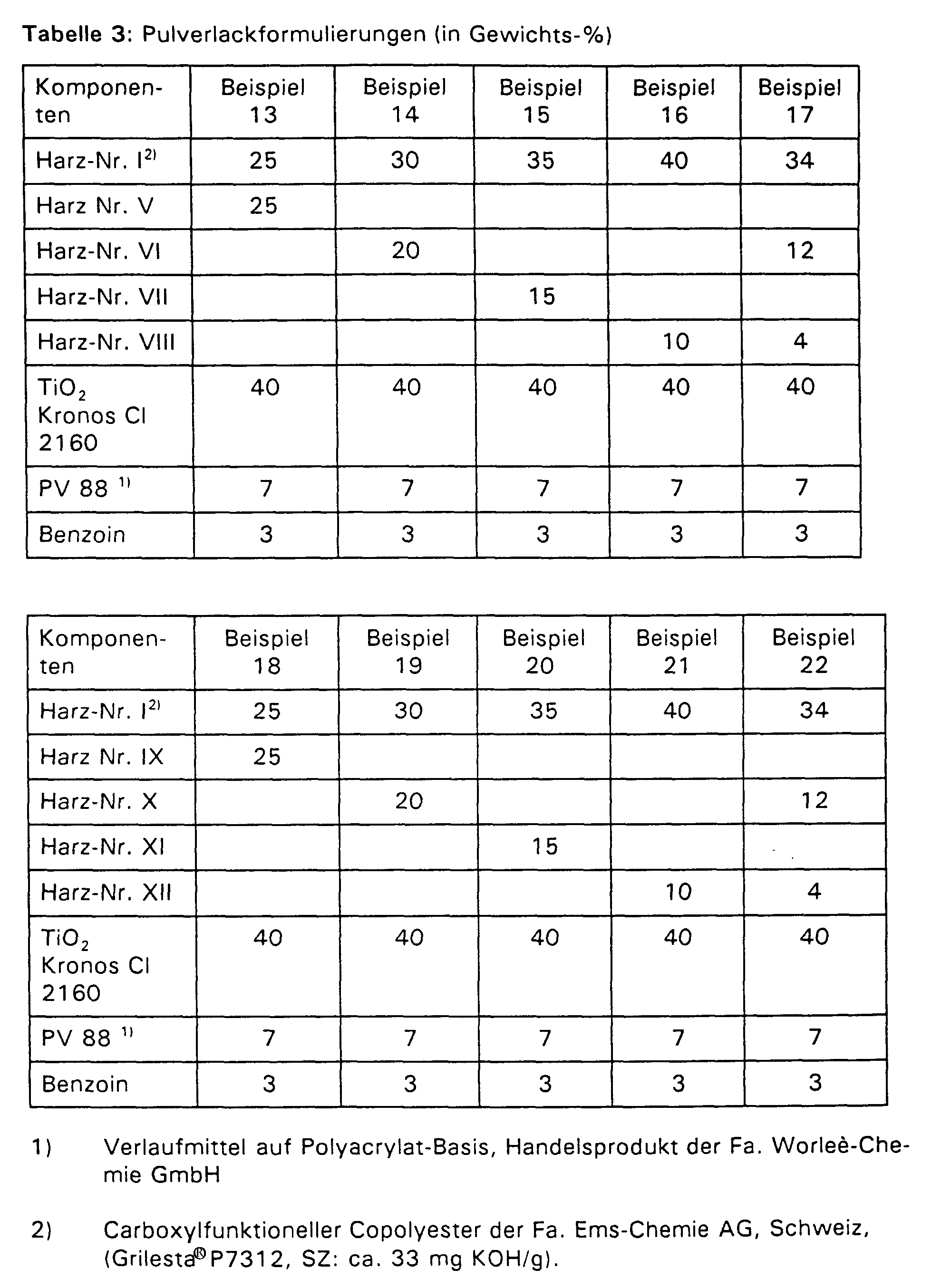

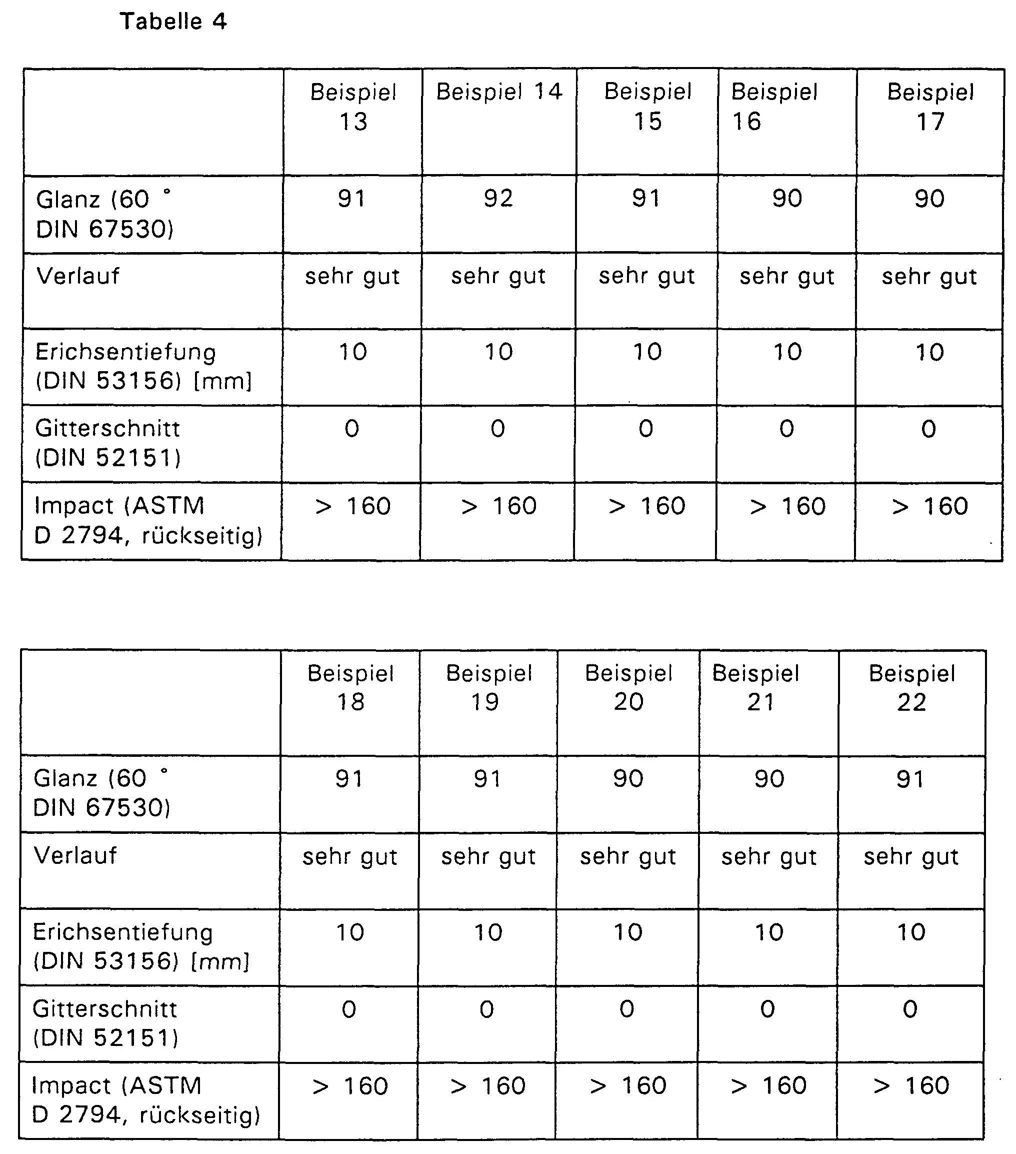

## Patentansprüche

1. Verfahren zur Herstellung von glycidyletherhaltigen amorphen und/oder semikristallinen Copolyestern (A), mit einem Molekulargewicht (Mw) von 100 bis 15000 und einer Epoxidzahl von zwischen 0,03 und 0,75 [Eqiv./100g], durch Polykondensation von mehrwertigen Carbonsäuren mit Polyolen, wobei man in einem ersten Schritt einen hydroxylfunktionellen amorphen Copolyester (D) mit einer Hydroxylzahl von zwischen 20 und 200 [mg KOH/g] und/oder einen semikristallinen Copolyester (D) mit einer Hydroxylzahl von zwischen 20 und 400 [mg KOH/g] herstellt und anschließend mit Epihaloalkanen zu glycidyletherhaltigen Copolyestern (A) umsetzt.

2. Verfahren zur Herstellung von glycidyletherhaltigen Copolyestern nach Anspruch 1, dadurch gekennzeichnet, daß im ersten Schritt ein amorpher Copolyester (D) mit einer Hydroxylzahl von zwischen 20 und 150 [mg KOH/g], und einer Glasumwandlungstemperatur > 40°C hergestellt wird.

3. Verfahren zur Herstellung von glycidyletherhaltigen Copolyestern nach Anspruch 1, dadurch gekennzeichnet, daß im ersten Schritt ein semikristalliner Copolyester (D) mit einer Hydroxylzahl zwischen 100 und 300 [mg KOH/g], hergestellt wird.

4. Verfahren zur Herstellung von glycidyletherhaltigen Copolyestern nach einem der Ansprüche 1 bis 3, dadurch gekennzeichnet, daß die Epihaloalkane ausgewählt sind aus der Gruppe 1-Chloro-2,3-epoxypropan (Epichlorhydrin), 1-Chloro-2-methyl-2,3-epoxypropan, 1-Chloro-2,3-epoxybutan und Epibromhydrin, wobei 1-Chloro-2,3-epoxypropan bevorzugt wird.

5. Verfahren gemäß einem der Ansprüche 1 bis 4, dadurch gekennzeichnet, daß man die Umsetzung in 2 Stufen, d.h. zuerst die Anlagerung von Epihaloalkan an die Hydroxylgruppe in Gegenwart von Lewissäuren und anschließend die Dehydrohalogenierung des Polyhalohydrins mit Lauge, durchführt.

6. Verfahren gemäß einem der Ansprüche 1 bis 4, dadurch gekennzeichnet, daß man die Umsetzung einstufig, d.h. nach einem Phasentransfermechanismus in Gegenwart von quaternären Oniumsalzen, durchführt.

7. Glycidyletherhaltige amorphe und/oder semikristalline Copolyester (A) mit einem Molekulargewicht (Mw) von 100 bis 15000 und einer Epoxidzahl von zwischen 0,03 und 0,75 [Eqiv./100g], bevorzugt zwischen 0,03 und 0,42 [Eqiv./100g], erhältlich nach dem Verfahren nach einem der Ansprüche 1 bis 6..

8. Copolyester gemäß Anspruch 7, dadurch gekennzeichnet, daß der amorphe glycidyletherhaltige Copolyester Komponenten aus der Gruppe Terephthalsäure, Isophthalsäure, Adipinsäure, Trimellithsäureanhydrid, Neopentylglykol, Ethylenglykol und Trimethylolpropan enthält.

9. Copolyester gemäß einem der Ansprüche 7 oder 8, dadurch gekennzeichnet, daß der amorphe glycidyletherhaltige Copolyester 0 bis 60 Mol-% Cyclohexandicarbonsäure, 60 bis 0 Mol-% Isophthalsäure und Neopentylglykol enthält.

10. Copolyester gemäß Anspruch 7, dadurch gekennzeichnet, daß der semikristalline Copolyester Dodecandicarbonsäure und Hexandiol enthält.

11. Wärmehärtbare pulverförmige Beschichtungsmasse, welche folgende Komponenten enthält:
(A) mindestens einen glycidyletherhaltigen amorphen und/oder semikristallinen Copolyester (A) gemäß einem oder mehreren der Ansprüche 7 bis 10,
(B) eine aliphatische und/oder cycloaliphatische mehrbasische Säure und/oder deren Anhydrid und/oder ein polyolmodifiziertes Anhydrid einer mehrbasischen Säure und/oder amorphe oder semikristalline carboxylhaltige Copolyesterharze und/oder carboxylfunktionelle Acrylatharze,
(c) gegebenenfalls Füllstoffe und/oder Pigmente und/oder Additive,
dadurch gekennzeichnet, daß die Komponente (A) nach dem Verfahren gemäß einem der Ansprüche 1 bis 6 erhältlich ist.

12. Beschichtungsmasse gemäß Anspruch 11, dadurch gekennzeichnet, daß Komponente (B) ein amorphes carboxylfunktionelles Copolyesterharz mit einer Säurezahl von 20 bis 100 [mg KOH/g) und einer Glasumwandlungstemperatur von > 40°C ist.

13. Beschichtungsmasse gemäß Anspruch 11, dadurchgekennzeichnet, daß Komponente (B) ein carboxylfunktionelles Acrylatharz mit einer Säurezahl von 20 bis 100 [mg KOH/g) ist.

14. Beschichtungsmasse gemäß Anspruch 11, dadurch gekennzeichnet, daß Komponente (B) in einer Menge vorhanden ist, die 0,4 bis 1,4, insbesondere 0,8 bis 1,2, Carboxylgruppen und/oder Anhydridgruppen pro Epoxidgruppe am glycidyletherhaltigen Copolyester (A) entspricht.

15. Verfahren zur Herstellung von Pulverlacken, dadurch gekennzeichnet, daß man in der Schmelze durch gemeinsame Extrusion sämtlicher Formulierungsbestandteile der Beschichtungsmassen nach einem der Ansprüche 11 bis 14 sowie zusätzlich üblicher Pigmente und/oder Füllstoffe und/oder Additive, bei Temperaturen zwischen 60 und 140°C, ein Extrudat herstellt, dieses anschließend abkühlt, mahlt und auf eine Korngröße von < 90 µm absiebt.

16. Pulverlack, herstellbar nach dem Verfahren nach Anspruch 15.

17. Verwendung der Beschichtungsmassen nach einem der Ansprüche 11 bis 14 oder des Pulverlacks nach Anspruch 16 als Schutzschichten.

## Claims

1. A method for the manufacture of glycidyl-ether-containing amorphous and/or semicrystalline copolyesters (A) having a molecular weight (mw) of 100 to 15,000 and an epoxy value of 0.03 to 0.75 [equiv./100 g] by polycondensation of multivalent carboxylic acids with polyols in which in a first step a hydroxyl-functional amorphous copolyester (D) having a hydroxyl value of 20 to 200 [mg KOH/g] and/or a semicrystalline copolyester (D) having a hydroxyl value of 20 to 400 [mg KOH/g] are manufactured and are then converted with epihaloalkanes into glycidyl-ether-containing copolyesters (A).

2. The method for the manufacture of glycidyl-ether-containing copolyesters as claimed in Claim 1 in which in the first step an amorphous copolyester (D) having a hydroxyl value of 20 to 150 [mg KOH/g] and a glass-transition temperature of >40 °C is manufactured.

3. The method for the manufacture of glycidyl-ether-containing copolyesters as claimed in Claim 1 in which in the first step a semicrystalline copolyester (D) having a hydroxyl value of 100 to 300 [mg KOH/g] is manufactured.

4. The method for the manufacture of glycidyl-ether-containing copolyesters as claimed in any one of Claims 1 to 3 in which the epihaloalkanes are selected from the group consisting of 1-chloro-2,3-epoxypropane (epichlorohydrin), 1-chloro-2-methyl-2,3-epoxypropane, 1-chloro-2,3-epoxybutane, and epibromohydrin, in which 1-chloro-2,3-epoxypropane is preferred.

5. The method as claimed in any one of Claims 1 to 4 in which the conversion is performed in two steps, that is, at first the addition of epihaloalkanes to the hydroxyl group in the presence of Lewis acids and then the dehydrohalogenation of the polyhalohydrin with lye.

6. The method as claimed in any one of Claims 1 to 4 in which the conversion is performed in a single step, that is, through a phase-transfer mechanism in the presence of quaternary onium salts.

7. Glycidyl-ether-containing amorphous and/or semicrystalline copolyesters (A) having a molecular weight (mw) of 100 to 15,000 and an epoxy value of 0.03 to 0.75 [equiv./100 g], preferably 0.03 to 0.42 [equiv./100 g], which can be obtained by the method as claimed in any one of Claims 1 to 6.

8. The copolyesters as claimed in Claim 7 in which the amorphous glycidyl-ether-containing copolyester contains components selected from the group consisting of terephthalic acid, isophthalic acid, adipic acid, trimellitic acid anhydride, neopentylglycol, ethyleneglycol, and trimethylol propane.

9. The copolyesters as claimed in any one of Claims 7 or 8 in which the amorphous glycidyl-ether-containing copolyester contains 0 to 60 mole per cent cyclohexane dicarboxylic acid, 60 to 0 mole per cent isophthalic acid, and neopentylglycol.

10. The copolyesters as claimed in Claim 7 in which the semicrystalline copolyester contains dodecane dicarboxylic acid and hexanediol.

11. Thermosetting powdery coating material containing the following components:
(A) at least one glycidyl-ether-containing amorphous and/or semicrystalline copolyester (A) as claimed in one or several of Claims 7 to 10;
(B) an aliphatic and/or cycloaliphatic polybasic acid and/or its anhydride and/or a polyolmodified anhydride of a polybasic acid and/or amorphous or semicrystalline carboxylcontaining copolyester resins and/or carboxyl-functional acrylate resins;
(C) fillers and/or pigments and/or additives if required,
in which the component (A) can be obtained by the method as claimed in any one of Claims 1 to 6.

12. The coating material as claimed in Claim 11 in which component (B) is an amorphous carboxyl-functional copolyester resin having an acid value of 20 to 100 [mg KOH/g] and a glass-transition temperature of >40 °C.

13. The coating material as claimed in Claim 11 in which component (B) is a carboxyl-functional acrylate resin having an acid value of 20 to 100 [mg KOH/g].

14. The coating material as claimed in Claim 11 in which component (B) is present in an amount which is equivalent to 0.4 to 1.4, in particular 0.8 to 1.2, carboxyl groups and/or anhydride groups per epoxide ring in the glycidyl-ether-containing copolyester (A).

15. A method for the manufacture of powder varnishes in which an extrudate is produced in the melt by co-extrusion of all formulation constituents of the coating materials as claimed in any one of Claims 11 to 14 as well as additionally of usual pigments and/or fillers and/or additives at a temperature of 60 to 140 °C and said extrudate is then cooled, ground and screened out to a grain size of <90 µm.

16. A powder varnish which can be produced by the method as claimed in Claim 15.

17. Use of the coating materials as claimed in any one of Claims 11 to 14 or of the powder varnish as claimed in Claim 16 as protective coatings.

## Revendications

1. Procédé de fabrication de copolyesters (A) amorphes et/ou semi-cristallins contenant des éthers glycidyliques, de masse moléculaire (Mw) comprise entre 100 et 15000 et ayant un nombre de résidus époxydes compris entre 0,03 et 0,75 [équivalents/100g], par polycondensation d'acides carboxyliques plurifonctionnels avec des polyols, pour lequel dans un première étape on procède à la fabrication d'un copolyester amorphe (D) à groupements hydroxyles fonctionnels ayant un nombre de résidus hydroxyles compris entre 20 et 200 [mg KOH/g] et/ou d'un copolyester semi-cristallin (D) ayant un nombre de résidus hydroxyles compris entre 20 et 400 [mg KOH/g], puis on le transforme avec des épihaloalcanes en copolyesters (A) contenant des éthers glycidyliques.

2. Procédé de fabrication de copolyesters (A) contenant des éthers glycidyliques selon la revendication 1, caractérisé en ce que dans une première étape on procède à la fabrication d'un copolyester amorphe (D) ayant un nombre de résidus hydroxyles compris entre 20 et 150 [mg KOH/g] et une température de transition vitreuse > 40°C.

3. Procédé de fabrication de copolyesters (A) contenant des éthers glycidyliques selon la revendication 1, caractérisé en ce que dans une première étape on procède à la fabrication d'un copolyester semi-cristallin (D) ayant un nombre de résidus hydroxyles compris entre 100 et 300 [mg KOH/g].

4. Procédé de fabrication de copolyesters (A) contenant des éthers glycidyliques selon l'une quelconque des revendications 1 à 3, caractérisé en ce que les épihaloalcanes sont sélectionnés parmi le groupe constitué par le 1-chloro-2,3-époxypropane (épichlorhydrine), le 1-chloro-2-méthyle-2,3-époxypropane, le 1-chloro-2,3-époxybutane et l'épibromhydrine, le 1-chloro-2,3-époxypropane étant préféré.

5. Procédé de fabrication selon l'une quelconque des revendications 1 à 4, caractérisé en ce que la transformation s'effectue en deux étapes, à savoir en premier lieu par fixation des épihaloalcanes au niveau des groupements hydroxyles en présence d'acides de Lewis, puis par déshydrohalogénation des polyhalohydrines avec un bain de lavage alcalin.

6. Procédé de fabrication selon l'une quelconque des revendications 1 à 4, caractérisé en ce que la transformation s'effectue en une seule étape, à savoir par un mécanisme de transfert de phases en présence de sels quaternaires à radical onium.

7. Copolyester (A) amorphe et/ou semi-cristallin contenant des éthers glycidyliques, de masse moléculaire (Mw) comprise entre 100 et 15000 et ayant un nombre de résidus époxydes compris entre 0,03 et 0,75 [équivalents/100g], et préférentiellement compris entre 0,03 et 0,42 [équivalents/100g], qui peut être obtenu selon le procédé de l'une quelconque des revendication 1 à 6.

8. Copolyester selon la revendication 7, caractérisé en ce que le copolyester amorphe contenant des éthers glycidyliques comprend des composants appartenant au groupe constitué par l'acide téréphtalique, l'acide isophtalique, l'acide adipique, l'anhydride d'acide triméllitique, le néopentylglycol, l'éthylèneglycol et le triméthylolpropane.

9. Copolyester selon la revendication 7 ou 8, caractérisé en ce que le copolyester amorphe contenant des éthers glycidyliques comprend 0 à 60% en moles d'acide cyclohexanedicarboxylique, 60 à 0% en moles d'acide isophtalique et du néopentylglycol.

10. Copolyester selon la revendication 7, caractérisé en ce que le copolyester semi-cristallin comprend de l'acide dodécanedicarboxylique et de l'hexanediol.

11. Matière à recouvrir thermodurcissable se présentant sous la forme d'une poudre, qui comprend les composants suivants :
(A) au moins un copolyester (A) amorphe et/ou semi-cristallin contenant des éthers glycidyliques selon l'une ou plusieurs des revendications 7 à 10,
(B) un acide polybasique aliphatique et/ou cycloaliphatique et/ou son anhydride et/ou un anhydride d'acide polybasique modifié par des polyols et/ou une résine copolyester amorphe ou semi-cristalline comprenant des groupements carboxyles et/ou une résine acrylique à groupements carboxyles fonctionnels,
(C) optionnellement des agents de remplissage et/ou des pigments et/ou des additifs,
caractérisée en ce que les composants (A) puissent être obtenus par le procédé selon l'une quelconque des revendications 1 à 6.

12. Matière à recouvrir selon la revendication 11, caractérisée en ce que le composant (B) est une résine copolyester amorphe comprenant des groupements carboxyles ayant un indice d'acidité compris entre 20 et 100 [mg KOH/g] et une température de transition vitreuse > 40°C.

13. Matière à recouvrir selon la revendication 11, caractérisée en ce que le composant (B) est une résine acrylique à groupements carboxyles fonctionnels ayant un indice d'acidité compris entre 20 et 100 [mg KOH/g].

14. Matière à recouvrir selon la revendication 11, caractérisée en ce que le composant (B) est présent en des proportions telles que l'on ait 0,4 à 1,4, et plus particulièrement 0,8 à 1,2 groupements carboxyles et/ou groupements anhydrides par groupement époxyde du copolyester (A) contenant des éthers glycidyliques.

15. Procédé de fabrication de peintures en poudre, caractérisé en ce que l'on produit un extrudât par extrusion conjointe de la masse de l'ensemble des éléments constitutifs de la formulation telle que décrite au niveau de l'une quelconque des revendications 11 à 14 et de pigments et/ou agents de remplissages et/ou additifs additionnels usuels, à des températures comprises entre 60 et 140°C, puis en ce que l'on refroidit cet extrudât, en ce qu'on le broie et en ce qu'on le tamise à un taille de grains de <90 µm.

16. Peinture en poudre qui peut être obtenue selon le procédé de la revendication 15.

17. Utilisation des matières à recouvrir selon l'une quelconque des revendications 11 à 14 ou des peintures en poudre selon la revendication 16 comme couches de protection.
